# EUROPÄISCHE PATENTSCHRIFT

(11) **EP 3 812 709 B1**
(45) Veröffentlichungstag und Bekanntmachung des Hinweises auf die Patenterteilung: **04.08.2021**
(21) Anmeldenummer: 19204435.2
(22) Anmeldetag: 21.10.2019
(51) Int. Cl.: G01D 5/244, G01D 5/245, G01D 5/347

(54) **POSITIONSMESSVORRICHTUNG**
POSITION MEASURING DEVICE
DISPOSITIF DE MESURE DE POSITION

(43) Veröffentlichungstag der Anmeldung: 28.04.2021
(73) Patentinhaber: SICK AG, 79183 Waldkirch (DE)
(72) Erfinder: Sellmer, Christian, 78166 Donaueschingen (DE)
(74) Vertreter: Ludewigt, Christoph

(56) Entgegenhaltungen:
- EP-A1- 3 451 526
- EP-A2- 2 466 266
- DE-A1- 4 402 401
- JP-A- 2005 024 493
- US-A1- 2009 206 827

## Beschreibung

Die Erfindung betrifft eine Positionsmessvorrichtung zur Bestimmung einer Position eines ersten Objekts relativ zu einem gegenüber dem ersten Objekt beweglichen zweiten Objekt gemäß dem Oberbegriff des Anspruchs 1.

In vielfältigen Industrieanwendungen werden Sensoren als Positionsmessvorrichtungen eingesetzt, um eine Position eines ersten Objektes im Raum oder in Bezug zu einem stationären zweiten Objekt zu bestimmen. Hierbei können die Sensoren auf einem optischen, kapazitiven, induktiven oder magnetischen Messprinzip beruhen.

Hierbei umfasst ein Sensor üblicherweise einen Sender, einen Modulator, einen Empfänger und eine Auswerteeinheit. Der Sender stellt einen Erregerstrahl bzw. eine Erregerwelle bereit, der bzw. die in Richtung des Modulators gerichtet ist. Der Modulator, der üblicherweise mit dem ersten Objekt verbunden ist und sich mit dem ersten Objekt bewegt, moduliert in Abhängigkeit von einer Bewegung des ersten Objektes einen ursprünglichen Zustand des Erregerstrahls bzw. der Erregerwelle. Der modulierte und geänderte Zustand des Erregerstrahls bzw. der Erregerwelle wird vom Empfänger detektiert und vorzugsweise in Cosinus- und Sinus-Signale für die Auswerteeinheit umgewandelt. Die Auswerteeinheit wertet die Cosinus- und Sinus-Signale aus und leitet daraus Positionssignale des ersten Objektes her.

Um eine hochgenaue Bestimmung der Position des ersten Objektes zu gewährleisten, müssen der Sender, der Modulator und der Empfänger sehr genau zueinander im Sensor angeordnet werden, wobei eine sehr geringe Relativbewegung des Modulators gegenüber dem Empfänger, wie beispielsweise eine Exzentrizität des Modulators gegenüber dem Empfänger bei einem Drehgeber als Sensor, bereits zu einem nicht zu vernachlässigenden Messfehler bei der Bestimmung der Position des ersten Objektes führen kann.

Es sind unterschiedliche Methoden bekannt, diesen Messfehler zu bestimmen und damit die Messgenauigkeit des Sensors bzw. der Positionsmessvorrichtung zu erhöhen.

Eine Möglichkeit besteht beispielsweise darin, eine diametrale Messung insbesondere einer Winkelposition des ersten Objektes durchzuführen. Hierbei wird an zwei zu dem ersten Objekt bezogenen Positionen die Winkelposition bestimmt und dann ein Mittelwert und eine Positionsdifferenz gebildet. Daraus kann basierend auf einer Abweichung zwischen den zwei Winkelpositionswerten die Exzentrizität des ersten Objektes gegenüber dem zweiten Objekt ermittelt und in der Bestimmung der korrekten Position des ersten Objektes berücksichtigt werden.

Eine weitere bekannte Möglichkeit zur Ermittlung der Exzentrizität des ersten Objektes besteht in einer Anordnung zusätzlicher Empfänger und insbesondere ein Vorsehen einer entsprechenden Codespur auf dem Modulator für den zusätzlichen Empfänger, so dass zusätzliche Messsignale der Position des ersten Objektes detektiert werden, die sich aufgrund der Exzentrizität unterscheiden. Hieraus kann die Exzentrizität direkt ermittelt werden. Mit der ermittelten Exzentrizität kann die aktuelle Position des ersten Objektes, beispielweise durch eine Umsetzungstabelle, korrigiert werden.

Diese Vorgehensweisen weisen den Nachteil auf, dass zusätzliche Komponenten, insbesondere Abtastchips bzw. Empfänger oder Codespuren auf dem Modulator, verwendet werden müssen, wodurch die Komplexität des Sensors bzw. der Positionsmessvorrichtung erhöht wird. Demzufolge erhöht sich ebenfalls der Preis des Sensors bzw. der Positionsmessvorrichtung.

Aus US 2009/206827 A1 ist eine Positionsmessvorrichtung gemäß den Merkmalen des Oberbegriffs des Anspruchs 1 bekannt.

JP 2005/024493 A offenbart einen Abnormalitätsdetektor für einen Resolver, der in der Lage ist, eine Abnormalität des Resolvers durch einfache Schaltungskonstitution zu erkennen. Hierzu wird ein Erregungssignal, das eine vorgeschriebene Frequenz umfasst, von einer Erregungssignalausgangsschaltung an den Resolver eingeprägt, so dass eine durch das Erregungssignal erfassbar gemachte Abnormalität des Drehgebers bestimmt werden kann.

Es ist eine Aufgabe der Erfindung, eine Positionsmessvorrichtung zur Bestimmung einer Position eines ersten Objekts relativ zu einem gegenüber dem ersten Objekt beweglichen zweiten Objekt zur Verfügung zu stellen, die eine verbesserte Messgenauigkeit gewährleistet.

Die Aufgabe wird erfindungsgemäß durch eine Positionsmessvorrichtung mit den Merkmalen des Anspruchs 1 gelöst.

Hierdurch ergibt sich der Vorteil, dass die Positionsmessvorrichtung mit beispielsweise nur einem Abtastchip bzw. einer Empfangseinheit ausgestattet werden muss, um eine hochgenaue Positionsbestimmung zu gewährleisten. Ferner kann eine bestehende Positionsmessvorrichtung mit der erfindungsgemäßen Auswerteeinheit nachträglich ausgerüstet werden, so dass die Messgenauigkeit einer bestehenden Positionsmessvorrichtung verbessert werden kann.

In diesem Zusammenhang wird unter Tastgrad ein Verhältnis zwischen der Impulsdauer zur Periodendauer einer periodischen Folge von Signalimpulsen verstanden. Das heißt, bei einem Tastgrad von 0,5 ergibt sich eine Folge aus symmetrischen Signalimpulsen. Je mehr der Tastgrad von dem Wert 0,5 abweicht, desto unsymmetrischer werden die Signalimpulse der Folge.

Gemäß einem bevorzugten Ausführungsbeispiel verändern sich die zweiten Elemente entlang ihre Ausrichtung entgegengesetzt zu den ersten Elementen in ihrer Breite, wobei sich die ersten Elemente entlang ihrer Ausrichtung verschlanken und sich die zweiten Elemente entlang ihrer Ausrichtung verbreitern. Hierbei ist unter Verschlanken bzw. Verbreitern zu verstehen, dass eine Breite eines jeweiligen ersten bzw. zweiten Elements entlang ihrer Ausrichtung kontinuierlich abnimmt bzw. zunimmt, so dass eine Fläche des ersten bzw. zweiten Elements insgesamt kleiner bzw. größer wird.

Gemäß einem weiteren bevorzugten Ausführungsbeispiel sind das erste Objekt eine Welle und die Maßverkörperung eine Codescheibe oder das erste Objekt eine Schiene und die Maßverkörperung ein linearer Maßstab. Das heißt, dass eine Bestimmung sowohl einer Winkelposition als auch einer linearen Position exakt möglich ist, da ein Messfehler aufgrund einer Exzentrizität ermittelt und berücksichtigt werden kann.

Weiterhin ist gemäß einem weiteren bevorzugten Ausführungsbeispiel bei einer Codescheibe die Ausrichtung der ersten und zweiten Elemente radial gerichtet oder bei einem linearen Maßstab die Ausrichtung der ersten und zweiten Elemente senkrecht zu einer Bewegungsrichtung des Maßstabs gerichtet. Hierdurch ist es vorteilhafterweise möglich, eine negative oder positive Abweichung des Tastgrades von einem Tastgrad von 0,5 zu detektieren.

Vorteilhafterweise umfasst die Empfangseinheit Fotodetektoren oder Magnetsensoren, so dass die Positionsmessvorrichtung insbesondere auf einem optischen, magnetischen, kapazitiven oder induktiven Messprinzip aufgebaut werden kann. Hierbei sind insbesondere das erste signalmodulierende Element lichtdurchlässig und das zweite signalmodulierende Element lichtundurchlässig oder das erste Element lichtreflektierend und das zweite Element lichtabsorbierend, wobei vorzugsweise sich eine Fläche des ersten Elements entlang der Ausrichtung vergrößert und sich die Fläche des zweiten signalmodulierenden Elements entgegengesetzt verkleinert.

Andererseits umfassen vorteilhafterweise das erste signalmodulierende Element einen Magnet und das zweite Element eine nicht magnetische Fläche oder das erste Element eine Elektrodenfläche und das zweite Element eine nicht elektrisierende Fläche, wobei insbesondere ein Magnetfeld des Magneten oder der Elektrodenfläche entlang der Ausrichtung abnimmt und sich die Fläche des zweiten Elements entgegengesetzt vergrößert.

Weiterhin verändert sich, gemäß einem weiteren bevorzugten Ausführungsbeispiel, der Tastgrad der Maßverkörperung bezogen auf die Ausrichtung der ersten und zweiten Elemente kontinuierlich zwischen 0 und 1, insbesondere 0,3 und 0,7, so dass die Exzentrizität der Maßverkörperung am ersten Objekt genau bestimmt werden kann. Hierbei sind vorzugsweise das erste Sinus-Signal um 90° phasenversetzt zu dem ersten Cosinus-Signal und das zweite Sinus-Signal um 90° phasenversetzt zu dem zweiten Cosinus-Signal. Insbesondere sind das zweite Cosinus-Signal um 180° phasenversetzt zu dem ersten Cosinus-Signal und das zweite Sinus-Signal um 180° phasenversetzt zu dem ersten Sinus-Signal.

Dadurch ist eine eindeutige Unterscheidung zwischen den Signalen gegeben, die zu einem auswertbaren Signalverlauf aus der Summen- und/oder dritten Differenzenbildung führt.

Zusätzlich ist die Auswerteeinheit vorzugsweise ausgelegt, die ermittelten Werte des resultierenden Tastgrades mit Werten bei einem mittleren Tastgrad von 0,5 der Maßverkörperung zu vergleichen, so dass eine positive oder negative Abweichung des Tastgrades bestimmbar ist.

Die erfindungsgemäße Positionsmessvorrichtung kann auf ähnliche Weise durch weitere Merkmale ausgestaltet werden und zeigt dabei ähnliche Vorteile. Derartige weitere Merkmale sind beispielhaft, aber nicht abschließend in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügten Zeichnungen anhand von Ausführungsbeispiele erläutert. Die Figur der Zeichnungen zeigt in:
- Fig. 1: eine schematische Darstellung eines Grundaufbaus einer Positionsmessvorrichtung in Form eines Drehgebers,
- Fig. 2A: eine schematische Darstellung eines ersten Ausführungsbeispiels einer erfindungsgemäßen Maßverkörperung der Positionsmessvorrichtung in der Figur 1,
- Fig. 2B: eine schematische Darstellung eines zweiten Ausführungsbeispiels der Maßverkörperung der Positionsmessvorrichtung in der Figur 1,
- Fig. 3: eine schematische Darstellung eines Grundaufbaus der Positionsmessvorrichtung in Form eines linearen Wegsensors,
- Fig. 4: eine schematische Darstellung eines Ausführungsbeispiels eines erfindungsgemäßen Maßstabs der Positionsmessvorrichtung in der Figur 3,
- Fig. 5: eine schematische Darstellung der Verläufe der Signale der Empfangseinheit der Positionsmessvorrichtung ohne eine Abweichung vom Tastgrad 0,5,
- Fig. 6: eine schematische Darstellung der Verläufe der ersten und zweiten Differenzsignale bei einer Abweichung vom Tastgrad 0,5 von 0,25, und
- Fig. 7A, 7B: eine schematische Darstellung der Verläufe der Summen- und dritten Differenzenbildung bei einer negativen bzw. positiven Abweichung vom Tastgrad von 0,5.

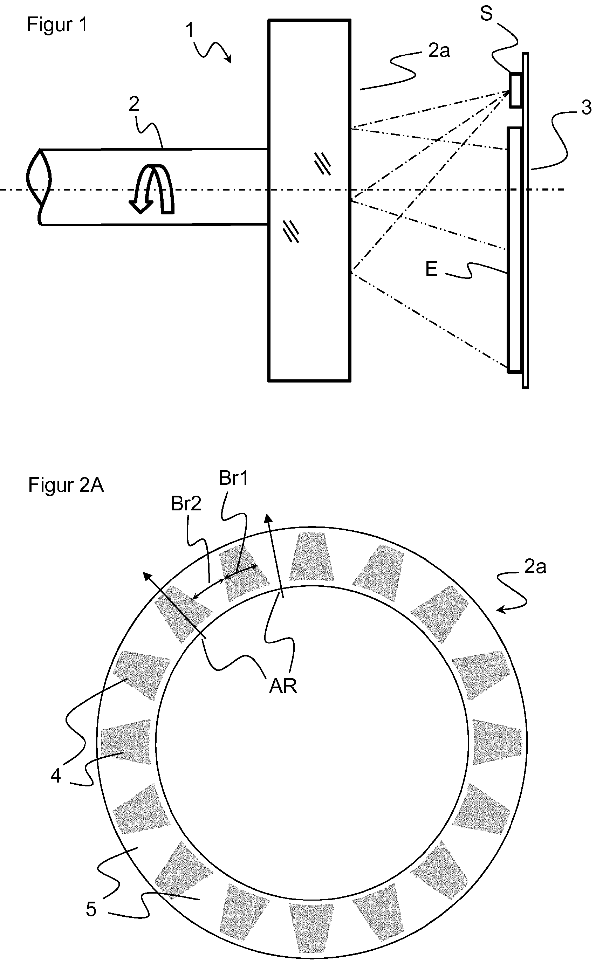

In der Figur 1 ist eine schematische Darstellung eines Grundaufbaus einer Positionsmessvorrichtung 1 in Form eines Drehgebers dargestellt, der eine Drehwinkelposition erfasst. Der Drehgeber umfasst ein erstes Objekt 2 in Form einer Welle, dessen Position gegenüber eines stationären zweiten Objektes 3 in Form einer Platine bestimmt werden soll. Mit der Welle ist eine Maßverkörperung 2a verbunden, die sich mit der Welle gegenüber der Platine dreht und entsprechend einer Drehung der Welle modulierte Signale an eine auf der Platine vorgesehene Empfangseinheit E übermittelt. Beim dem dargestellten Ausführungsbeispiel ist eine reflexive Messanordnung der Positionsmessvorrichtung 1 gezeigt. Die Positionsmessvorrichtung 1 kann jedoch auch auf dem transmittierenden Messprinzip aufgebaut sein.

Hierbei ist auf der Platine ein Sender S vorgesehen, der in diesem Ausführungsbeispiel einen Erregerlichtstrahl auf die Maßverkörperung 2a aussendet, wobei der Erregerlichtstrahl von der Maßverkörperung 2a als die modulierten Signale zurückreflektiert wird.

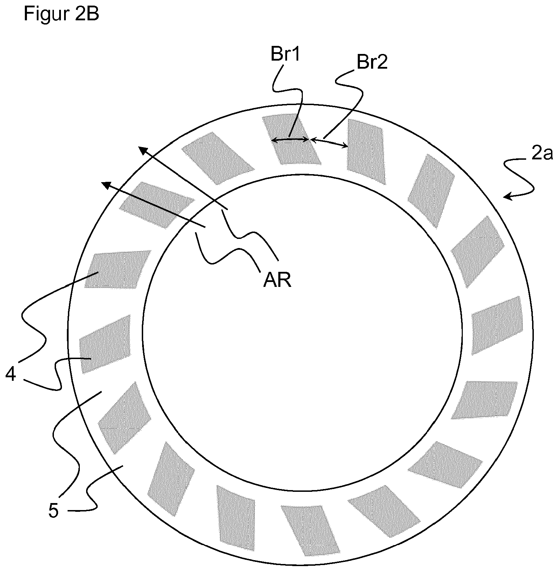

Erfindungsgemäß ist die Maßverkörperung 2a derart ausgebildet, dass auf der Maßverkörperung 2a erste und zweite signalmodulierende Elemente 4 und 5, wie auf den Figuren 2A und 2B dargestellt, benachbart zueinander angeordnet sind. Jedes erste und zweite Element 4 und 5 weist eine jeweilige Ausrichtung AR auf. Die ersten Elemente 4 verändern sich entlang ihre Ausrichtung AR in ihrem Umfang derart, dass sich ein Verhältnis einer Breite zwischen jeweils der Breite Br1 des ersten Elements 4 und der Breite Br2 des zweiten Elements 5 entlang der Ausrichtung AR des ersten bzw. zweiten Elements 4 bzw. 5 verändert.

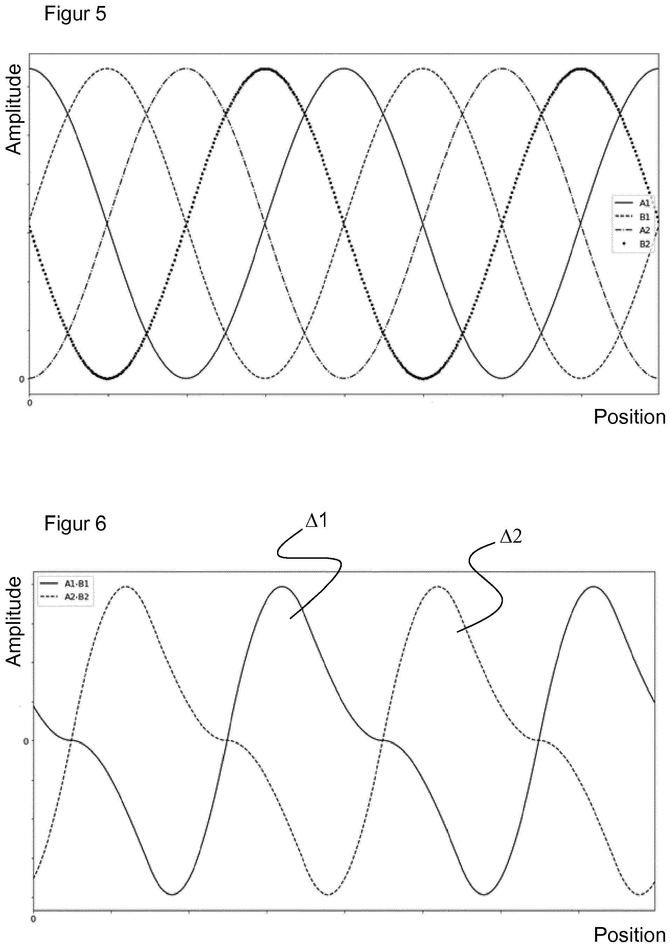

Die mit dem zweiten Objekt 3 verbundene Empfangseinheit E erzeugt ein erstes und ein zweites Sinus-Signal A1 und A2, wie in der Figur 5 dargestellt. Die Empfangseinheit E erzeugt ferner ein erstes und zweites Cosinus-Signal B1 und B2, wie in der Figur 5 dargestellt.

Die Positionsmessvorrichtung 1 umfasst eine nicht dargestellte Auswerteeinheit, die die Signale der Empfangseinheit E auswertet. Hierbei ist die Auswerteeinheit derart ausgelegt, dass die Auswerteeinheit eine erste Differenzenbildung A1-B1, wie in der Figur 6 dargestellt, aus dem ersten Sinus-Signal A1 und dem ersten Cosinus-Signal B1 durchführt, um ein erstes Differenzsignal Δ1 zu erhalten. Die Auswerteeinheit führt weiterhin eine zweite Differenzenbildung A2-B2, wie in der Figur 6 dargestellt, aus dem zweiten Sinus-Signal A2 und dem zweiten Cosinus-Signal B2 durch, um ein zweites Differenzsignal Δ2 zu erhalten.

Weiterhin führt die Auswerteeinheit eine Summenbildung Δ1+Δ2, eine dritte Differenzenbildung Δ1-Δ2, oder eine Summen- und dritte Differenzenbildung Δ1+Δ2 und Δ1-Δ2 aus dem ersten und zweiten Differenzsignal Δ1 und Δ2 durch. Die Auswerteeinheit vergleicht ein Ergebnis der Summenbildung Δ1+Δ2, der dritten Differenzenbildung Δ1-Δ2, oder der Summen- und dritten Differenzenbildung Δ1+Δ2 und Δ1-Δ2 um eine Änderung eines aufgrund des verändernden Verhältnisses der Breite resultierenden Tastgrades zu ermitteln. Hieraus leitet die Auswerteeinheit ein Positionssignal des ersten Objektes 2 ab, das von dieser Änderung des Tastgrades abhängig ist.

Mit anderen Worten, bei einem Vorhandensein einer Exzentrizität zwischen der Maßverkörperung und der Empfangseinheit E, bewirkt die erfindungsgemäße Form der Maßverkörperung 2a eine Änderung des Tastgrades der Maßverkörperung 2a, so dass durch die Summenbildung Δ1+Δ2 und die Differenzenbildungen der Signale A1, A2, B1 und B2 diese Änderung ersichtlich und bestimmbar wird. Mittels eines Vergleichs des Ergebnisses der Summenbildung Δ1+Δ2 und/oder der dritten Differenzenbildung Δ1-Δ2 kann ein Positionssignal ohne den Einfluss der Exzentrizität errechnet werden. Insbesondere kann das Ergebnis der Summenbildung Δ1+Δ2 und/oder der dritten Differenzenbildung Δ1-Δ2 mit einem Bezugspositionssignal bei einem mittleren Tastgrad von 0,5 der Maßverkörperung 2a verglichen werden, so dass ein Einfluss der Änderung des Tastgrades auf das Positionssignal noch genauer bestimmt werden kann.

Aus der Summenbildung Δ1+Δ2 oder der dritten Differenzenbildung Δ1-Δ2 ist bereits der fehlerhafte Einfluss der Exzentrizität auf das Positionssignal errechenbar. Die Kombination aus der Summenbildung Δ1+Δ2 und der dritten Differenzenbildung Δ1-Δ2 führt zu einer noch präziseren Bestimmung des Positionssignals, so dass die Positionsmessvorrichtung 1 noch präziser funktionieren kann.

Die Form der Maßverkörperung 2a ist vorzugsweise derart ausgebildet, dass sich die zweiten Elemente 5 entlang ihrer Ausrichtung AR entgegengesetzt zu den ersten Elementen 4 in ihrem Umfang verändern. Insbesondere verschlanken sich die ersten Elemente 4 entlang ihrer Ausrichtung AR und verbreitern sich die zweiten Elemente 5 entlang ihrer Ausrichtung AR.

Die Figuren 2A und 2B zeigen jeweils bevorzugte Ausführungsbeispiele einer Maßverkörperung 2a der Positionsmessvorrichtung 1 gemäß der Figur 1, wobei in diesen Ausführungsbeispielen die Maßverkörperung 2a in Form einer Codescheibe ausgebildet ist.

Bei der Maßverkörperung 2a bzw. Codescheibe in der Figur 2A sind die ersten und zweiten signalmodulierenden Elemente 4 und 5 radial ausgerichtet. Das erste Element 4 weist eine stumpf-kegelförmige Form auf, die in die Ausrichtung AR des ersten Elements 4 gerichtet ist. Mit zunehmendem Radius der Maßverkörperung 2a nimmt die Fläche des ersten Elements 4 kontinuierlich ab. Mit anderen Worten eine Breite Br1 des ersten Elements 4 nimmt mit zunehmendem Radius ab.

Die zweiten signalmodulierenden Elemente 5 sind abwechselnd benachbart zu den ersten Elementen 4 angeordnet, wobei jedes zweite Element 5 ebenfalls eine stumpf-kegelförmige Form aufweist und radial gerichtet angeordnet ist. Die Fläche jedes zweiten Elements 5 nimmt entgegengesetzt zu der Fläche eines benachbarten ersten Elements 4 mit zunehmendem Radius der Maßverkörperung 2a zu. Das heißt mit anderen Worten, die Breite Br2 der zweiten Elemente 5 nimmt mit zunehmendem Radius der Maßverkörperung 2a zu.

Hierdurch verändert sich vorzugsweise der Tastgrad der Maßverkörperung 2a bezogen auf die Ausrichtung AR der ersten und zweiten Elemente 4 und 5 kontinuierlich zwischen 0,0 und 1,0, insbesondere zwischen 0,3 und 0,7, wobei der Tastgrad am Innenradius der Maßverkörperung 2a 0,0, insbesondere 0,3, und am Außenradius 1,0, insbesondere 0,7, beträgt.

Bei dem weiteren bevorzugten Ausführungsbeispiel der Maßverkörperung 2a in der Figur 2B weisen die signalmodulierenden ersten und zweiten Elemente 4 und 5 ebenfalls eine stumpf-kegelförmige Form, wobei die ersten und zweiten Elemente 4 und 5 nicht, wie bei den ersten und zweiten Elemente 4 und 5 der vorherigen Maßverkörperung 2a, exakt radial ausgerichtet angeordnet sind. Die ersten und zweiten Elemente 4 und 5 sind jeweils geneigt zu einem Radius der Maßverkörperung 2a angeordnet.

Die Anordnung der ersten und zweiten Elemente 4 und 5 weist in einer Gesamtbetrachtung der Maßverkörperung 2a ein Sägeblatt ähnliche Form auf.

Hierbei nehmen die Breite Br1 eines jeden ersten Elements 4 entlang dessen Ausrichtung AR mit zunehmendem Radius der Maßverkörperung 2a kontinuierlich ab und die Breite Br2 eines jeden benachbarten zweiten Elements 5 entgegengesetzt zu, wobei eine Zunahme der Breite Br2 der zweiten Elemente 5 größer als eine Abnahme der Breite Br1 der ersten Elemente 4 ist, so dass eine Änderung des Tastgrades der Maßverkörperung 2a der Figur 2B sich von der Änderung des Tastgrades der Maßverkörperung 2a der Figur 2A unterscheidet.

Mittels der zusätzlichen Neigung der ersten und zweiten Elemente 4 und 5 gegenüber dem Radius der Maßverkörperung 2a und der unterschiedlichen Ab- bzw. Zunahme der Breite Br1 bzw. Br2 kann die Auswerteeinheit auf Basis der charakteristischen Änderung des Tastgrades die Exzentrizität der Maßverkörperung 2a gegenüber dem zweiten Objekt 3 mit der Empfangseinheit E noch eindeutiger und genauer bestimmen.

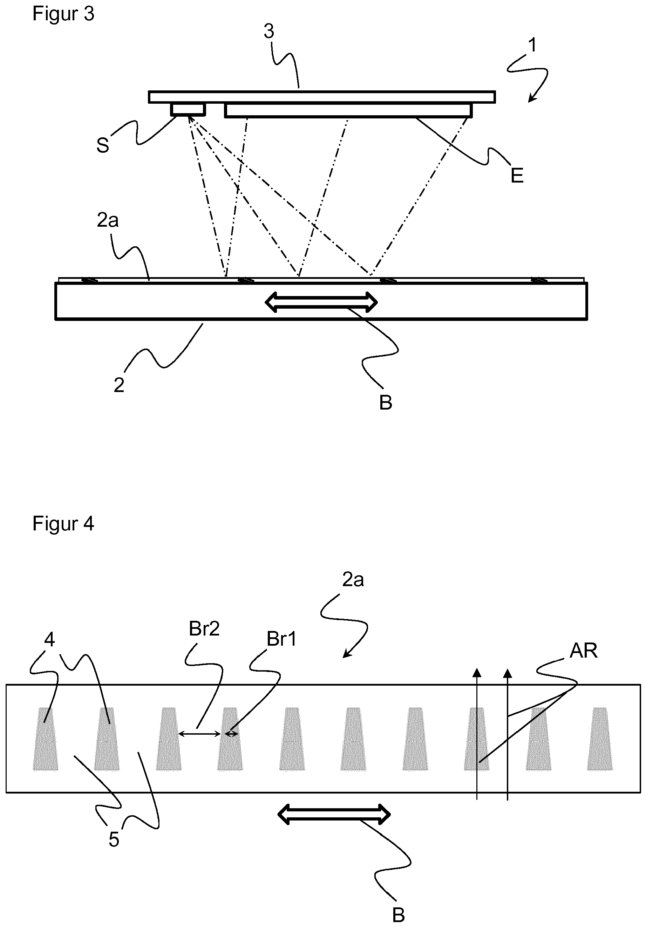

In der Figur 3 ist schematisch ein Grundaufbau eines anderen Ausführungsbeispiels der Positionsmessvorrichtung 1 in Form eines linearen Wegsensors dargestellt. Der Wegsensor besteht aus einem beweglichen ersten Objekt 2 in Form eines Maßstabs mit einer Maßverkörperung 2a, wobei sich das erste Objekt 2 gegenüber einem stationären zweiten Objekt 3 bewegt.

In diesem Zusammenhang sei erwähnt, dass die Beweglichkeit der Objekte zueinander auch umgekehrt wie beschrieben vorgesehen sein kann. Das heißt, dass das erste Objekt 2 stationär und das zweite Objekt 3 beweglich angeordnet sind. In diesem Ausführungsbeispiel können beispielsweise das erste Objekt 2 der Boden sein, auf dem die Maßverkörperung 2a aufgebracht ist, und das zweite Objekt 3 einen an einem Wagen befestigten Sensor sein, der sich mit dem Wagen über den Boden hinwegbewegt und dabei anhand der Erfassung der Maßverkörperung 2a die Position des Wagens ermittelt.

An dem zweiten Objekt 3 ist eine Empfangseinheit E angeordnet, die die Maßverkörperung 2a erfasst.

Wie in der Figur 4 als schematische Draufsicht auf die Maßverkörperung 2a bzw. auf den Maßstab dargestellt, weist die Maßverkörperung 2a erste und zweite signalmodulierende Elemente 4 und 5 auf, die abwechselnd benachbart zueinander auf der Maßverkörperung 2a angeordnet sind. Die Maßverkörperung 2a bewegt sich entlang einer als Doppelpfeil dargestellten Bewegungsrichtung B gegenüber dem ersten Objekt 3.

Die ersten und zweiten Elemente 4 und 5 weisen, wie bei den vorher beschriebenen Elementen 4 und 5 der Codescheibe, ebenfalls eine stumpf-kegelförmige Form auf, wobei die Ausrichtung AR der ersten und zweiten Elemente 4 und 5 senkrecht zu der Bewegungsrichtung B der Maßverkörperung 2a orientiert ist. Hierdurch verändert sich ein Tastgrad der Positionsmessvorrichtung 1, wenn sich die Maßverkörperung 2a gegenüber der Bewegungsrichtung B und damit gegenüber der Empfangseinheit E neigt bzw. kippt.

Die Bestimmung der Position des Maßstabs bzw. der Maßverkörperung 2a bleibt durch die Erfassung und Berücksichtigung der Änderung des Tastgrades durch die Auswerteinheit trotz der möglichen Neigung bzw. Kippung des Maßstabs gegenüber der Empfangseinheit E präzise.

Die Breite Br1 der ersten Elemente 4 nimmt entlang der Ausrichtung AR kontinuierlich ab, so dass die effektive Fläche der ersten Elemente 4 mit zunehmender Länge entlang der Ausrichtung AR kleiner wird. Die Breite Br2 der zweiten Elemente 5 nimmt hingegen entlang der Ausrichtung AR kontinuierlich zu, so dass die effektive Fläche der zweiten Elemente 5 entgegengesetzt zu den ersten Elementen 4 mit zunehmender Länge entlang der Ausrichtung AR größer wird.

Die Änderung des Verhältnisses der Breite Br1 der ersten Elemente 4 zu der Breite Br2 der zweiten Elemente 5 bewirkt die Änderung des Tastgrades bei Vorhandensein der Neigung bzw. Kippung des Maßstabs gegenüber der Empfangseinheit E, wobei diese Änderung durch die Auswerteeinheit mit den Differenzenbildungen A1-B1, A2-B2, der Summenbildung Δ1+Δ2 und/oder der Differenzenbildung Δ1-Δ2 errechnet wird.

Die Empfangseinheit E umfasst je nach Ausführungsbeispiel Fotodetektoren oder Magnetsensoren. Bei Fotodetektoren handelt es sich um eine auf optischem Messprinzip basierende Positionsmessvorrichtung 1 und bei Magnetsensoren handelt es sich um eine auf magnetischem, kapazitivem oder induktivem Messprinzip basierende Positionsmessvorrichtung 1.

Die Maßverkörperung 2a einer optischen Positionsmessvorrichtung 1 weist lichtdurchlässige erste signalmodulierende Elemente 4 und lichtundurchlässige zweite signalmodulierende Elemente 5 oder lichtreflektierende erste Elemente 4 und lichtabsorbierende zweite Elemente 5 auf. Insbesondere vergrößert sich eine Fläche des ersten Elements 4 entlang der Ausrichtung AR und verkleinert sich die Fläche des zweiten Elements 5 entlang der Ausrichtung AR.

Bei einer auf magnetischem, kapazitivem oder induktivem Messprinzip basierenden Positionsmessvorrichtung 1 umfasst das erste signalmodulierende Element 4 einen Magnet und das zweite signalmodulierende Element 5 eine nicht magnetische Fläche oder das erste Element 4 eine Elektrodenfläche und das zweite Element 5 eine nicht elektrisierende Fläche. Hierbei nimmt insbesondere ein Magnetfeld des Magneten oder der Elektrodenfläche des ersten Elements 4 ab und sich die Fläche des zweiten Elements 5 entgegengesetzt vergrößert.

Die modulierten Signale der Maßverkörperung 2a werden von der Empfangseinheit E empfangen und, wie in der Figur 5 dargestellt, erfasst. Die Signale werden als periodische Schwingungen in der Figur 5 wiedergegeben, wobei das erste Sinus-Signal A1 um 90° phasenversetzt zu dem ersten Cosinus-Signal B1 und das zweite Sinus-Signal A2 um 90° phasenversetzt zu dem Cosinus-Signal B2 sind. Vor allem sind das erste und zweite Sinus-Signal A1 und A2 bzw. das erste und zweite Cosinus-Signal B1 und B2 um 180° zueinander phasenversetzt.

Die Auswerteeinheit der erfindungsgemäßen Positionsmessvorrichtung 1 bildet aus den ersten Sinus- und Cosinus-Signal A1 und B1 ein erstes Differenzensignal Δ1 und aus den zweiten Sinus- und Cosinus-Signal A2 und B2 ein zweites Differenzensignal Δ2. Der Verlauf der ersten und zweiten Differenzensignale Δ1 und Δ2 aus der ersten und zweiten Differenzenbildung ist in der Figur 6 dargestellt. Hieraus ergibt sich der Vorteil, dass ein Offset der Einzelphasen der Signale reduziert wird. Ferner ist aus den Kurven ein Einfluss der Änderung des Tastgrades aufgrund der Exzentrizität der Maßverkörperung 2a sichtbar. Wenn sich die Maßverkörperung 2a um ca. eine Periode der Signale A1, A2, B1 und B2 bewegt hat, dann sind die Amplitude der Signale A1, A2, B1 und B2 ermittelbar. Zusätzlich sollten Messwerte der Signale A1, A2, B1 und B2 von mindestens einer halben Periode vorhanden sein, damit eine eindeutige Ermittlung der Exzentrizität der Maßverkörperung 2a durchführbar ist.

Aus den ersten und zweiten Differenzensignale Δ1 und Δ2 führt die Auswerteeinheit eine Summenbildung Δ1+Δ2 und/oder eine dritte Differenzenbildung Δ1-Δ2 durch. Die Ergebnisse der Summenbildung Δ1+Δ2 und/oder der dritten Differenzenbildung Δ1-Δ2 werden miteinander verglichen, so dass die Änderung des Tastgrades aufgrund des verändernden Verhältnisses der Breite Br1 und Br2 der ersten und zweiten Elemente 4 und 5 ermittelt wird. In Abhängigkeit von dieser Änderung des Tastgrades leitet die Auswerteeinheit die Positionssignale des ersten Objektes 2 ab, bei denen die Exzentrizität der Maßverkörperung 2a mitberücksichtigt ist.

Ferner vergleicht die Auswerteeinheit vorzugsweise die Ergebnisse der Summenbildung Δ1+Δ2 und/oder der dritten Differenzenbildung Δ1-Δ2 mit Werten bei einem mittleren Tastgrad von 0,5 der Maßverkörperung, so dass eine positive oder negative Abweichung des Tastgrades bestimmbar ist.

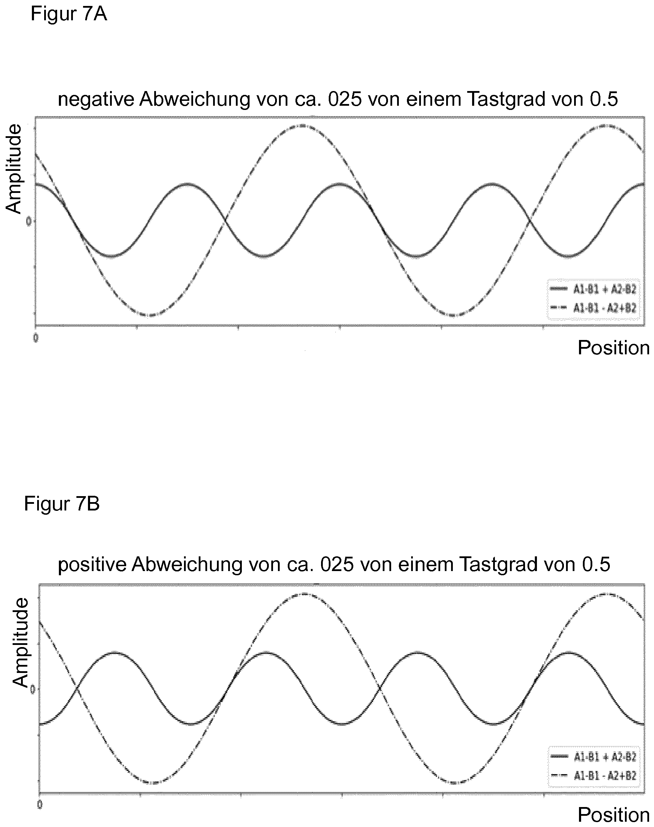

In den Figuren 7A und 7B ist beispielshaft jeweils das Ergebnis der Summenbildung Δ1+Δ2 und der dritten Differenzenbildung Δ1-Δ2 bezogen auf ein Tastgrad von 0,5 grafisch dargestellt, wobei in der Figur 7A die Abweichung um -0,25 von dem Tastgrad von 0,5 und in der Figur 7B die Abweichung um +0,25 von dem Tastgrad von 0,5 beträgt.

Die Kurven der Summenbildungen Δ1+Δ2 mit der negativen und positiven Abweichung weisen eine Phasenverschiebung von 180° zueinander auf, wobei die Kurven der dritten Differenzenbildung Δ1-Δ2 miteinander übereinstimmen. Zusätzlich weisen die Kurven der Summenbildungen Δ1+Δ2 eine wesentlich höhere Amplitude gegenüber einer nicht dargestellten Kurve für den mittleren Tastgrad von 0,5 auf. Hierdurch ist das Ableiten der Abweichung der Positionssignale aufgrund der Exzentrizität vereinfacht.

### Bezugszeichenliste

- 1: Positionsmessvorrichtung
- 2: Erstes Objekt
- 2a: Maßverkörperung
- 3: Zweites Objekt
- 4: Erstes signalmodulierende Element
- 5: Zweites signalmodulierende Element

- AR: Ausrichtung
- B: Bewegungsrichtung
- Br1, Br2: Breite des ersten und zweiten Elements
- E: Empfangseinheit
- S: Sender

## Patentansprüche

1. Positionsmessvorrichtung (1) zur Bestimmung einer Position eines ersten Objekts (2) relativ zu einem gegenüber dem ersten Objekt (2) in einer Bewegungsrichtung (B) beweglichen zweiten Objekt (3), umfassend:
- eine mit dem ersten Objekt (2) verbundene Maßverkörperung (2a), die derart ausgebildet ist, dass auf der Maßverkörperung (2a) erste und zweite signalmodulierende Elemente (4, 5) benachbart zueinander angeordnet sind, wobei jedes erste und zweite Element (4, 5) jeweils eine Ausrichtung (AR) aufweist, und die ersten Elemente (4) entlang ihre Ausrichtung (AR) sich in ihrer Breite (Br1) derart verändern, dass sich ein Verhältnis einer Breite (Br1, Br2) zwischen jeweils der Breite des ersten Elements (4) und des zweiten Elements (5) entlang der Ausrichtung (AR) des ersten bzw. zweiten Elements (4, 5) verändert,
- eine mit dem zweiten Objekt (3) verbundene Empfangseinheit (E), die dazu eingerichtet ist ein erstes und ein zweites Sinus-Signal (A1, A2) und ein erstes und ein zweites Cosinus-Signal (B1, B2) zu erzeugen, und
- eine Auswerteeinheit zum Auswerten der Signale der Empfangseinheit (E), **dadurch gekennzeichnet, dass** die Auswerteeinheit ausgelegt ist:
eine erste Differenzenbildung aus dem ersten Sinus-Signal und dem ersten Cosinus-Signal zum Erhalt eines ersten Differenzsignals (Δ1) und eine zweite Differenzenbildung aus dem zweiten Sinus-Signal und dem zweiten Cosinus-Signal zum Erhalt eines zweiten Differenzsignals (Δ2) durchzuführen,
eine Summen- und/oder eine dritte Differenzenbildung (Δ1+Δ2, Δ1-Δ2) aus dem ersten und zweiten Differenzsignal (Δ1, Δ2) durchzuführen, und
Ergebnisse der Summen- und/oder der dritten Differenzenbildung (Δ1+Δ2, Δ1-Δ2) miteinander zu vergleichen, um eine Änderung eines aufgrund des verändernden Verhältnisses der Breite (Br1, Br2) resultierenden Tastgrades zu ermitteln und ein von der Änderung des Tastgrades abhängiges Positionssignal abzuleiten.

2. Positionsmessvorrichtung (1) nach Anspruch 1, **dadurch gekennzeichnet, dass** sich die zweiten Elemente (5) entlang ihrer Ausrichtung (AR) entgegengesetzt zu den ersten Elementen (4) in ihrer Breite (Br2) verändern, und wobei die ersten Elemente (4) sich entlang ihrer Ausrichtung (AR) verschlanken und die zweiten Elemente (5) sich entlang ihrer Ausrichtung (AR) verbreitern.

3. Positionsmessvorrichtung (1) nach Anspruch 1 oder 2, **dadurch gekennzeichnet, dass** das erste Objekt (2) eine Welle und die Maßverkörperung (2a) eine Codescheibe sind oder das erste Objekt (2) eine Schiene und die Maßverkörperung (2a) ein linearer Maßstab sind.

4. Positionsmessvorrichtung (1) nach Anspruch 3, **dadurch gekennzeichnet, dass** bei einer Codescheibe die Ausrichtung (AR) der ersten und zweiten Elemente (4, 5) radial gerichtet ist oder bei einem linearen Maßstab die Ausrichtung (AR) der ersten und zweiten Elemente (4, 5) senkrecht zu einer Bewegungsrichtung (B) des Maßstabs gerichtet ist.

5. Positionsmessvorrichtung (1) nach einem der vorhergehenden Ansprüche 1 bis 4, **dadurch gekennzeichnet, dass** die Empfangseinheit (E) Fotodetektoren oder Magnetsensoren umfasst.

6. Positionsmessvorrichtung (1) nach einem der vorhergehenden Ansprüche 1 bis 5, **dadurch gekennzeichnet, dass** das erste signalmodulierende Element (4) lichtdurchlässig und das zweite signalmodulierende Element (5) lichtundurchlässig oder das erste Element (4) lichtreflektierend und das zweite Element (5) lichtabsorbierend sind.

7. Positionsmessvorrichtung (1) nach Anspruch 6, **dadurch gekennzeichnet, dass** sich eine Fläche des ersten Elements (4) entlang der Ausrichtung vergrößert und sich die Fläche des zweiten signalmodulierenden Elements (5) entgegengesetzt verkleinert.

8. Positionsmessvorrichtung (1) nach einem der Ansprüche 1 bis 5, **dadurch gekennzeichnet, dass** das erste signalmodulierende Element (4) einen Magnet und das zweite Element (5) eine nicht magnetische Fläche oder das erste Element (4) eine Elektrodenfläche und das zweite Element (5) eine nicht elektrisierende Fläche umfassen.

9. Positionsmessvorrichtung (1) nach Anspruch 8, **dadurch gekennzeichnet, dass** ein Magnetfeld des Magneten oder der Elektrodenfläche entlang der Ausrichtung (AR) abnimmt und sich die Fläche des zweiten Elements entgegengesetzt vergrößert.

10. Positionsmessvorrichtung (1) nach einem der Ansprüche 1 bis 9, **dadurch gekennzeichnet, dass** sich der Tastgrad der Maßverkörperung (2a) bezogen auf die Ausrichtung (AR) der ersten und zweiten Elemente (4, 5) zwischen 0 und 1, insbesondere 0,3 und 0,7, kontinuierlich verändert.

11. Positionsmessvorrichtung (1) nach einem der Ansprüche 1 bis 10, **dadurch gekennzeichnet, dass** das erste Sinus-Signal um 90° phasenversetzt zu dem ersten Cosinus-Signal und das zweite Sinus-Signal um 90° phasenversetzt zu dem zweiten Cosinus-Signal sind.

12. Positionsmessvorrichtung (1) nach Anspruch 11, **dadurch gekennzeichnet, dass** das zweite Cosinus-Signal um 180° phasenversetzt zu dem ersten Cosinus-Signal und das zweite Sinus-Signal um 180° phasenversetzt zu dem ersten Sinus-Signal sind.

13. Positionsmessvorrichtung (1) nach einem der Ansprüche 1 bis 12, **dadurch gekennzeichnet, dass** die Auswerteeinheit ausgelegt ist, die ermittelten Werte des resultierenden Tastgrades mit Werten bei einem mittleren Tastgrad von 0,5 der Maßverkörperung zu vergleichen, so dass eine positive oder negative Abweichung des Tastgrades bestimmbar ist.

## Claims

1. A position measuring device (1) for determining a position of a first object (2) relative to a second object (3) movable in a moving direction (B) with respect to the first object (2), comprising:
- a measuring scale (2a) connected to the first object (2), the dimensional scale (2a) being configured such that first and second signal-modulating elements (4, 5) are arranged on the dimensional scale (2a) adjacent to each other, each of the first and second elements (4, 5) having a respective orientation (AR) and the first elements (4) vary in width (Br1) along their orientation (AR) such that a ratio of a width (Br1, Br2) between the width of each of the first element (4) and the second element (5) varies along the orientation (AR) of the first and second element (4, 5), respectively,
- a receiving unit (E) connected to the second object (3) and adapted to generate a first and a second sine signal (A1, A2) and a first and a second cosine signal (B1, B2), and
- an evaluation unit for evaluating the signals of the receiving unit (E), **characterized in that** the evaluation unit is designed:
to perform a first difference formation from the first sine signal and the first cosine signal to obtain a first difference signal (Δ1) and to perform a second difference formation from the second sine signal and the second cosine signal to obtain a second difference signal (Δ2),
to perform a summation and/or a third difference formation (Δ1+Δ2, Δ1-Δ2) from the first and second difference signals (Δ1, Δ2), and
to compare results of the summation and/or the third difference formation (Δ1+Δ2, Δ1-Δ2) with each other in order to determine a change of a duty cycle resulting due to the changing ratio of the width (Br1, Br2) and to derive a position signal dependent on the change of the duty cycle.

2. The position measuring device (1) according to claim 1, **characterized in that** the second elements (5) vary in width (Br2) along their orientation (AR) opposite to the first elements (4), and wherein the first elements (4) narrow along their orientation (AR) and the second elements (5) widen along their orientation (AR).

3. The position measuring device (1) according to claim 1 or 2, **characterized in that** the first object (2) is a shaft and the measuring scale (2a) is a code disk, or the first object (2) is a rail and the measuring scale (2a) is a linear scale.

4. The position measuring device (1) according to claim 3, **characterized in that,** in the case of a code disk, the orientation (AR) of the first and second elements (4, 5) is radially directed or, in the case of a linear scale, the orientation (AR) of the first and second elements (4, 5) is directed perpendicularly to a direction of movement (B) of the linear scale.

5. The position measuring device (1) according to any of the preceding claims 1 to 4, **characterized in that** the receiving unit (E) comprises photodetectors or magnetic sensors.

6. The position measuring device (1) according to any one of the preceding claims 1 to 5, **characterized in that** the first signal-modulating element (4) is light-transmissive and the second signal-modulating element (5) is light-impermeable, or the first element (4) is light-reflective and the second element (5) is light-absorbent.

7. The position measuring device (1) according to claim 6, **characterized in that** an area of the first signal-modulating element (4) increases along the orientation and the area of the second signal-modulating element (5) decreases in the opposite direction.

8. The position measuring device (1) according to any one of claims 1 to 5, **characterized in that** the first signal-modulating element (4) comprises a magnet and the second signal-modulating element (5) comprises a non-magnetic surface or the first element (4) comprises an electrode surface and the second element (5) comprises a non-electrifying surface.

9. The position measuring device (1) according to claim 8, **characterized in that** a magnetic field of the magnet or the electrode area decreases along the orientation (AR) and the area of the second element increases in the opposite direction.

10. The position measuring device (1) according to any one of claims 1 to 9, **characterized in that** the duty cycle of the measuring scale (2a) changes continuously between 0 and 1, in particular 0.3 and 0.7, with respect to the orientation (AR) of the first and second elements (4, 5).

11. The position measuring device (1) according to any one of claims 1 to 10, **characterized in that** the first sine signal is 90° out of phase with the first cosine signal and the second sine signal is 90° out of phase with the second cosine signal.

12. The position measuring device (1) according to claim 11, **characterized in that** the second cosine signal is 180° out of phase with the first cosine signal and the second sine signal is 180° out of phase with the first sine signal.

13. The position measuring device (1) according to one of claims 1 to 12, **characterized in that** the evaluation unit is designed to compare the determined values of the resulting duty cycle with values at an average duty cycle of 0.5 of the measuring scale, so that a positive or negative deviation of the duty cycle is determinable.

## Revendications

1. Dispositif de mesure de position (1) pour déterminer une position d'un premier objet (2) par rapport à un second objet (3) mobile dans une direction de déplacement (B) par rapport au premier objet (2), comprenant:
- une échelle de mesure (2a) reliée au premier objet (2), l'échelle de mesure (2a) étant configurée de telle sorte que des premiers et seconds éléments de modulation de signal (4, 5) sont disposés sur l'échelle de mesure (2a) de manière adjacente les uns aux autres, chacun des premiers et seconds éléments (4, 5) ayant une orientation respective (AR) et les premiers éléments (4) varient en largeur (Br1) le long de leur orientation (AR) de sorte qu'un rapport des largeurs (Br1, Br2) entre la largeur de chacun du premier élément (4) et du second élément (5) varie le long de l'orientation (AR) du premier et du second élément (4, 5), respectivement,
- une unité de réception (E) connectée au second objet (3) et adaptée pour générer un premier et un second signal sinus (A1, A2) et un premier et un second signal cosinus (B1, B2), et
- une unité d'évaluation pour évaluer les signaux de l'unité de réception (E), **caractérisée en ce que** l'unité d'évaluation est conçue:
pour effectuer une première formation de différence à partir du premier signal sinus et du premier signal cosinus pour obtenir un premier signal de différence (Δ1) et effectuer une seconde formation de différence à partir du second signal sinus et du second signal cosinus pour obtenir un second signal de différence (Δ2),
pour effectuer une sommation et/ou une troisième formation de différence (Δ1+Δ2, Δ1-Δ2) à partir du premier et deuxième signaux de différence (Δ1, Δ2), et
pour comparer les résultats de la sommation et/ou de la troisième formation de différence (Δ1+Δ2, Δ1-Δ2) afin de déterminer un changement de facteur de durée résultant du rapport changeant de la largeur (Br1, Br2) et pour dériver un signal de position dépendant du changement du facteur de durée.

2. Dispositif de mesure de position (1) selon la revendication 1, **caractérisé en ce que** les seconds éléments (5) varient en largeur (Br2) le long de leur orientation (AR) opposés aux premiers éléments (4), et dans lequel les premiers éléments (4) se rétrécissent le long de leur orientation (AR) et les seconds éléments (5) s'élargissent le long de leur orientation (AR).

3. Dispositif de mesure de position (1) selon la revendication 1 ou 2, **caractérisé en ce que** le premier objet (2) est un arbre et l'échelle de mesure (2a) est un disque de code, ou le premier objet (2) est un barre et l'échelle de mesure (2a) est une échelle linéaire.

4. Dispositif de mesure de position (1) selon la revendication 3, **caractérisé en ce que,** dans le cas d'un disque de code, l'orientation (AR) des premiers et seconds éléments (4, 5) est dirigé radialement ou, dans le cas d'une échelle linéaire, l'orientation (AR) des premiers et seconds éléments (4, 5) est dirigé perpendiculairement à une direction de déplacement (B) de l'échelle linéaire.

5. Dispositif de mesure de position (1) selon l'une des revendications précédentes 1 à 4, **caractérisé en ce que** l'unité de réception (E) comprend des photodétecteurs ou des capteurs magnétiques.

6. Dispositif de mesure de position (1) selon l'une des revendications précédentes 1 à 5, **caractérisé en ce que** le premier élément de modulation de signal (4) transmet la lumière et le second élément de modulation de signal (5) est imperméable à la lumière, ou le premier élément (4) réfléchit la lumière et le second élément (5) absorbe la lumière.

7. Dispositif de mesure de position (1) selon la revendication 6, **caractérisé en ce qu'**une surface du premier élément (4) s'agrandit le long de l'orientation et la surface du second élément de modulation de signal (5) diminue dans la direction opposée.

8. Dispositif de mesure de position (1) selon l'une des revendications 1 à 5, **caractérisé en ce que** le premier élément de modulation de signal (4) comprend un aimant et le second élément de modulation de signal (5) comprend une surface non magnétique ou le premier élément (4) comprend une surface d'électrode et le second élément (5) comprend une surface non électrisante.

9. Dispositif de mesure de position (1) selon la revendication 8, **caractérisé en ce qu'**un champ magnétique de l'aimant ou de la zone d'électrode diminue le long de l'orientation (AR) et la zone du second élément augmente dans la direction opposée.

10. Dispositif de mesure de position (1) selon l'une des revendications 1 à 9, **caractérisé en ce que** le rapport cyclique de l'échelle de mesure (2a) varie continuellement entre 0 et 1, notamment entre 0,3 et 0,7, par rapport à l'orientation (AR) des premiers et seconds éléments (4, 5).

11. Dispositif de mesure de position (1) selon l'une des revendications 1 à 10, **caractérisé en ce que** le premier signal sinus est déphasé de 90° par rapport au premier signal cosinus et le second signal sinus est déphasé de 90° par rapport au second signal cosinus.

12. Dispositif de mesure de position (1) selon la revendication 11, **caractérisé en ce que** le second signal cosinus est déphasé de 180° par rapport au premier signal cosinus et le second signal sinus est déphasé de 180° par rapport au premier signal sinus.

13. Dispositif de mesure de position (1) selon l'une des revendications 1 à 12, **caractérisé en ce que** l'unité d'évaluation est conçue pour comparer les valeurs déterminées du rapport cyclique résultant avec des valeurs à un rapport cyclique moyen de 0,5 de l'échelle de mesure, de sorte qu'un écart positif ou négatif du rapport cyclique peut être déterminé.
